# FASCICULE DE BREVET EUROPEEN

(11) **EP 0 764 256 B1**
(45) Date de publication et mention de la délivrance du brevet: **30.12.1998**
(21) Numéro de dépôt: 95923375.0
(22) Date de dépôt: 13.06.1995
(51) Int. Cl.: F24H 3/00, F24H 9/20, F24D 13/02

(54) **RADIATEUR ELECTRIQUE A CORPS DE CHAUFFE NOYE DANS UN BLOC D'ALLIAGE LEGER**
ELEKTRISCHER HEIZKÖRPER MIT EINEM, IN EINEM LEICHTMETALLBLOCK EINGEBETTETEN, HEIZELEMENT
ELECTRIC RADIATOR WITH A HEATING BODY EMBEDDED IN A LIGHT ALLOY UNIT

(30) Priorité: 15.06.1994 FR 9407678
(43) Date de publication de la demande: 26.03.1997
(73) Titulaire: PEYRONNY, Bernard, 13160 Châteaurenard (FR)
(72) Inventeur: PEYRONNY, Bernard, 13160 Châteaurenard (FR)
(74) Mandataire: Roman, Michel
(86) Numéro de dépôt international: FR9500772
(87) Numéro de publication internationale: WO9534787

(56) Documents cités:
- DE-A- 1 765 962
- DE-U- 9 108 529
- FR-A- 2 172 761
- FR-A- 2 220 004
- GB-A- 2 162 028

## Description

La présente invention a pour objet un radiateur électrique à corps de chauffe noyé dans un bloc d'alliage léger.

Il est destiné au chauffage de base ou d'appoint des locaux de tous types, tels que logements, villas, bureaux, magasins ou autres locaux particuliers ou professionnels.

Actuellement, en dehors des établissements hospitaliers ou hôteliers, les installations de chauffage central sont de plus en plus abandonnées au profit d'appareils individuels autonomes, en raison des difficultés rencontrées pour contrôler et optimiser la consommation d'énergie dans les installations importantes.

Les trois sources d'énergie le plus couramment utilisées sont le fioul, le gaz et l'électricité (voir DE-U- 91 08529). Cette dernière présente de nombreux avantages tels que souplesse, propreté, confort, facilité de réglage et de programmation, faible investissement, etc, mais son coût rapporté au kilowatt-heure est sensiblement plus élevé que pour les deux autres énergies. C'est ce qui a motivé le développement du "chauffage intégré", associant des appareils de chauffage électrique à une isolation thermique des locaux. A ce jour, dans le but d'économiser l'énergie, les constructions neuves doivent obligatoirement comporter une bonne isolation thermique et l'électricité est de plus en plus fréquemment choisie comme source d'énergie.

Les appareils de chauffage sont en général des radiateuteurs constitués d'une enveloppe en tôle d'acier, pourvue d'une entrée et d'une sortie d'air et contenant une simple résistance électrique parfois associée à des ailettes ou des chicanes destinées à augmenter la surface d'échange ou à diriger le flux d'air. La régulation est assurée dans la plupart des cas par un thermostat intégré à l'appareil, plus rarement par un système plus évolué pouvant comporter thermostat de zone, thermostat extérieur, programmateur ou délesteur.

Les radiateurs électriques courants présentent en particulier deux inconvénients:
- La régulation s'effectue le plus souvent par tout ou rien entre deux températures voisines ("fourchette"). La source de chaleur est alternativement coupée et froide puis branchée et à sa température maximale. Des études récentes ont montré que l'impression ressentie ne correspond pas à la température moyenne, mais en fait à la température réelle la plus basse. De ce fait, la recherche de confort incite très fréquemment les utilisateurs à régler le thermostat quelques degrés au-dessus de la température souhaitée, ce qui conduit en pratique à un gaspillage d'énergie non négligeable.
- De très nombreuses campagnes de sensibilisation ont été menées pour encourager les économies d'énergie. Toutefois l'on sait que la plupart des personnes ayant accès à un thermostat gradué en degrés le règlent systématiquement à 19 ou 20 °C, qui représentent les valeurs généralement recommandées, alors que les utilisateur de radiateurs à eau chaude commandés par robinets non gradués se contentent souvent de températures sensiblement inférieures sans ressentir l'impression d'avoir froid.

Le dispositif selon la présente invention a pour objectif de remédier à ces inconvénients. Il permet en effet de réaliser des radiateurs électriques dans lesquels la température de la source de chaleur varie de façon très peu sensible, et dont la régulation n'est pas basée sur la valeur en degré de la température, mais sur un pourcentage de la puissance maximale. Ces appareils présentent en outre l'avantage d'accumuler de l'énergie thermique sans avoir l'encombrement des systèmes à accumulation habituels, ce qui permet par exemple de les loger dans des portes de communication.

Le dispositif est constitué d'une enveloppe métallique ou non contenant à sa partie inférieure un corps de chauffe constitué d'une résistance blindée noyée dans un bloc métallique d'alliage léger maintenu écarté de l'enceinte par des éléments raidisseurs de manière à ce que le bloc métallique soit entièrement entouré d'un matelas d'air, la régulation du système s'effectuant par un montage électronique agissant en coupant l'alimentation durant un laps de temps variable au cours d'un cycle de l'ordre de quatre secondes et affichant un poucentage de la puissance maximale.

Sur les dessins schématiques annexés, donnés à titre d'exemple non limitatif d'une des formes de réalisation de l'objet de l'invention:
la figure 1 est une coupe longitudinale verticale du corps de chauffe.
la figure 2 montre le tableau de commande vu de face,
la figure 3 représente en élévation une porte de communication équipée d'un corps de chauffe conforme à l'invention,
la figure 4 est une coupe verticale de la porte, suivant les flèches A-A de la figure 3, et
la figure 5 est une coupe horizontale de la porte, suivant les flèches B-B de la figure 3.

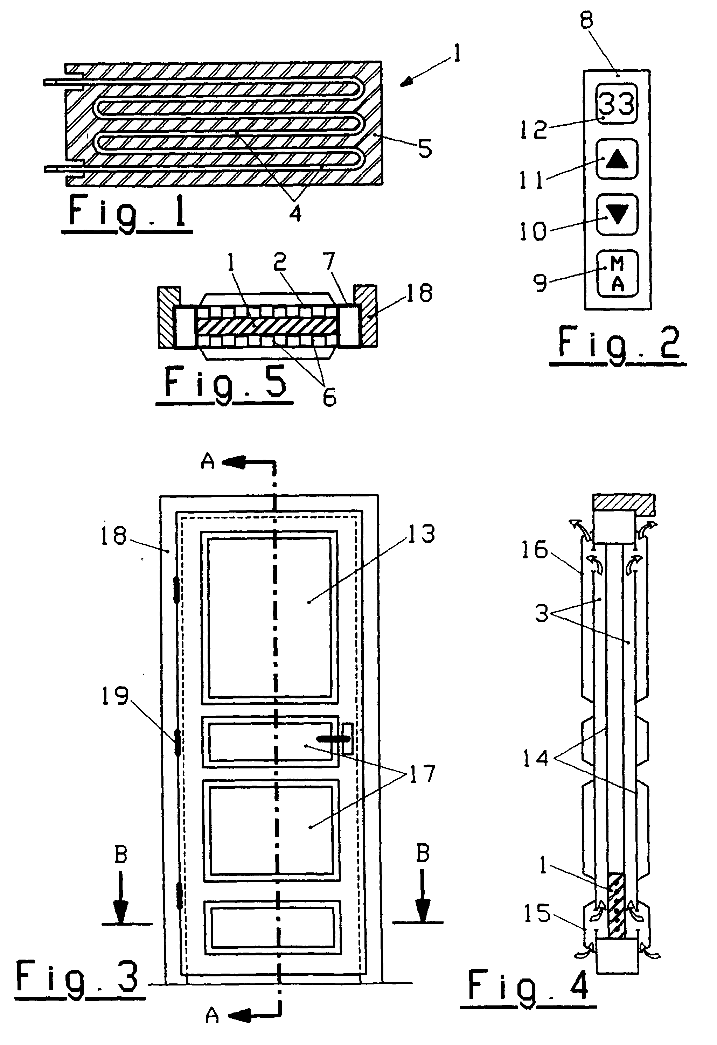

Le dispositif, figures 1 à 5, est constitué d'un corps de chauffe 1 électrique monté par l'intermédiaire d'entretoises à l'intérieur d'une enceinte 2 métallique ou en matière synthétique, de telle manière que dans toutes les directions, se trouve entre le corps de chauffe et l'enceinte un espace 3 permettant le passage de l'air, et déterminé pour que même en cas de marche continue à puissance maximale du radiateur, la température de l'enceinte ne puisse en aucun cas atteindre une température dangereuse.

Le corps de chauffe 1 est formé d'une résistance blindée 4, enrobée par moulage à chaud dans un bloc métallique 5 d'alliage léger dont le volume est calculé pour assurer une accumulation d'énergie thermique suffisante pour rendre insensibles les variations de température provoquées par les coupures d'alimentation utilisées pour la régulation.

Les entretoises peuvent être constituées par exemple de raidisseurs 6, dans le cas d'une enceinte 2 métallique, et/ou de profilés 7 tubulaires servant éventuellement de conduits pour les câbles d'alimentation électrique.

Au contraire des appareils habituels, la régulation est obtenue sans thermostat, et sans référence à la température ambiante réelle. Un boîtier de commande 8 électronique comporte des circuits coupant et rétablissant le courant périodiquement suivant un cycle de courte durée, par exemple de quatre secondes. En fonction des durées respectives de coupure et de rétablissement, le corps de chauffe recevra une puissance pouvant varier de 0 à 100 % de la puissance nominale. La face avant dudit boîtier comporte une touche marche-arrêt 9, deux poussoirs 10, 11 faisant respectivement augmenter et diminuer de manière progressive la durée des périodes d'établissement du courant, et donc la puissance relative, la valeur de cette dernière, exprimée en pourcents, étant affichée sur un petit écran 12 à cristaux liquides ou similaire.

Une application particulièrement intéressante de la présente invention est la réalisation de portes de communication chauffantes 13 (figures 3 à 5), ce qui permet de supprimer totalement le problème de l'encombrement des radiateurs.

La porte chauffante illustrée comporte à sa partie basse un corps de chauffe 1 conforme à celui décrit plus haut et deux plaques latérales 14 verticales formant avec des montants formés de profils 7 tubulaires une enceinte permettant la circulation de l'air. De chaque côté sont prévus des éléments creux bas 15 et hauts 16 ouverts vers l'extérieur et permettant respectivement la pénétration de l'air dans l'enceinte et sa sortie. Ces élément creux ont un aspect extérieur semblable à celui de panneaux décoratifs 17 montés sur les plaques latérales 14. Le boîtier de commande 8 pourra avantageusement être monté sur le dormant 18. Le passage des câbles électriques se fera de façon connue au moyen d'une gaine souple se logeant dans une cavité prévue dans la parie verticale du dormant, côté paumelles 18.

Le positionnement des divers éléments constitutifs donne à l'objet de l'invention un maximum d'effets utiles qui n'avaient pas été, à ce jour, obtenus par des dispositifs similaires.

## Revendications

1. Radiateur électrique à corps de chauffe noyé dans un bloc d'alliage léger, destiné au chauffage des locaux de tous types, tels que logements, villas, bureaux, magasins ou autres locaux particuliers ou professionnels,
caractérisé par la combinaison d'une enveloppe (2) contenant à sa partie inférieure un corps de chauffe (1) constitué d'une résistance blindée (4) noyée par moulage à chaud dans un bloc métallique (5) d'alliage léger maintenu écarté de l'enveloppe par des entretoises (6, 7) de manière à ce que le bloc métallique soit entièrement entouré d'un espace (3) formant matelas d'air, la régulation du système s'effectuant par un boîtier de commande (8) électronique comportant des circuits coupant et rétablissant périodiquement le courant d'alimentation durant un laps de temps réglable au cours d'un cycle de courte durée.

2. Radiateur électrique selon la revendication 1, se caractérisant par le fait que l'enveloppe (2) est métallique et que les entretoises sont constituées, au moins en partie de raidisseurs (6).

3. Radiateur électrique selon l'une quelconque des revendications précédentes se caractérisant par le fait que l'enveloppe (2) est métallique et que les entretoises sont constituées, au moins en partie de profilés (7) tubulaires.

4. Radiateur électrique selon la revendication 1, se caractérisant par le fait que l'enveloppe (2) est réalisée en matière synthétique.

5. Radiateur électrique selon l'une quelconque des revendications précédentes, se caractérisant par le fait que la face avant du boîtier de commande (8) comporte une touche marche-arrêt (9), deux poussoirs (10, 11) faisant respectivement augmenter et diminuer de manière progressive la durée des périodes d'établissement du courant, et donc la puissance relative, la valeur de cette dernière, exprimée en pourcents, étant affichée sur un petit écran (12).

6. Radiateur électrique selon l'une quelconque des revendications précédentes, se caractérisant par le fait qu'il constitue une porte de communication chauffante comportant à sa partie basse un corps de chauffe (1) constitué d'une résistance blindée (4) noyée par moulage à chaud dans un bloc métallique (5) d'alliage léger, et deux plaques latérales (14) verticales formant avec des montants constitués de profilés (7) une enceinte permettant la circulation de l'air.

7. Radiateur électrique selon la revendication 6, se caractérisant par le fait qu'il comporte de chaque côté des éléments creux bas (15) et hauts (16) ouverts vers l'extérieur et permettant respectivement la pénétration de l'air dans l'enceinte et sa sortie, lesdits éléments creux (15) ayant un aspect extérieur semblable à celui de panneaux décoratifs (17) montés sur les plaques latérales (14).

## Patentansprüche

1. Elektrischer Heizkörper mit einem in einen Leichtmetallblock eingegossenen Heizelement, bestimmt zur Heizung von Räumen jeglicher Art wie Wohnungen, Wohnhäuser, Büros, Geschäfte oder sonstige private oder gewerbliche Räume, gekennzeichnet durch die Kombination eines Gehäuses (2), das in seinem unteren Teil ein aus einem durch Warmguß in einen Leichtmetallblock (5) eingegossenen abgeschirmten Heizwiderstand (4) bestehendes Heizelement (1) enthält, welches durch Abstandsstücke (6, 7) von dem Gehäuse in Distanz gehalten wird, so daß der Leichtmetallblock völlig von einem ein Luftpolster bildenden Raum (3) umgeben ist, wobei die Regulierung durch eine elektronische Steuereinheit (8) mit Schaltkreisen, die die Netzspannung während eines im Lauf eines kurz andauernden Zyklusses einstellbaren Zeitabschnitts periodisch ein- und ausschalten, erfolgt.

2. Elektrischer Heizkörper gemäß Anspruch 1, dadurch gekennzeichnet, daß das Gehäuse (2) aus Metall besteht, und die Abstandsstücke mindestens teilweise aus Versteifungen (6) gebildet werden.

3. Elektrischer Heizkörper gemäß irgendeinem der vorhergehenden Ansprüche, dadurch gekennzeichnet, daß das Gehäuse (2) aus Metall besteht, und die Abstandsstücke mindestens teilweise aus Rohrprofilen (7) gebildet werden.

4. Elektrischer Heizkörper gemäß Anspruch 1, dadurch gekennzeichnet, daß das Gehäuse (2) aus Kunststoff hergestellt ist.

5. Elektrischer Heizkörper gemäß irgendeinem der vorhergehenden Ansprüche, dadurch gekennzeichnet, daß die Frontseite der Steuereinheit (8) mit einer Ein/Aus-Taste (9) und zwei Tasten (10, 11) versehen ist, welche ermöglichen, die Dauer der Einschaltzeit des Stromes, und damit die relative Leistung, stufenlos zu erhöhen bzw. zu vermindern, wobei der Wert dieser Leistung in Prozenten ausgedrückt in einem kleinen Anzeigefeld (12) angezeigt wird.

6. Elektrischer Heizkörper gemäß irgendeinem der vorhergehenden Ansprüche, dadurch gekennzeichnet, daß er eine heizende Verbindungstür bildet, die in ihrem unteren Teil ein aus einem durch Warmguß in einen Leichtmetallblock (5) eingegossenen abgeschirmten Heizwiderstand (4) bestehendes Heizelement (1) und zwei vertikale Seitenplatten (14) enthält, welche mit aus Profilen (7) bestehenden Ständern eine Umhüllung bilden, die eine Strömung der Luft ermöglicht.

7. Elektrischer Heizkörper gemäß Anspruch 6, dadurch gekennzeichnet, daß er auf jeder Seite untere und obere Hohlelemente (15, 16) aufweist, die nach außen geöffnet sind und den Einlaß von Luft in die Umhüllung bzw. deren Auslaß erlauben, wobei die besagten Hohlelemente einen äußeren Aspekt ähnlich dem von auf die Seitenplatten (14) montierten dekorativen Paneelen (17) haben.

## Claims

1. Electric radiator with heating element embedded in a lightweight alloy block for heating premises of all types such as houses, apartments, offices, shops and other private or professional premises,
characterised by the combination of an envelope (2) containing in its lower part a heating element (1) consisting of a shielded resistance (4) embedded by hot casting in a metal block (5) made of a lightweight alloy kept from contact with the envelope by spacers (6, 7) so that the metal block is entirely surrounded by a space (3) forming an air mattress, the system being regulated by an electronic control box (8) comprising circuits periodically cutting out and re-connecting the supply current during an adjustable time span of a short cycle.

2. Electric radiator as per claim 1 characterised in that the envelope (2) is metallic and the spacers consist, at least in part, of stiffeners (6).

3. Electric radiator as per any one of the aforesaid claims characterised in that the envelope (2) is metal and the spacers consist, at least in part, of tubular sections (7).

4. Electric radiator as per claim 1 characterised in that the envelope (2) consists of a synthetic material.

5. Electric radiator as per any one of the aforesaid claims characterised in that the front of the control box (8) contains an on/off button (9), two push buttons (10, 11) which respectively gradually increase and decrease the duration of energising and therefore the relative power, the value of the latter being displayed on a small screen (12) as a percentage value.

6. Electric radiator as per any one of the aforesaid claims characterised in that it comprises a heating door with a heating element (1) in its lower part consisting of a shielded resistance (4) embedded by hot casting in a metal block (5) of lightweight alloy and two lateral and vertical plates (14) which with the uprights comprising sections (7) form a containment allowing the air to circulate.

7. Electric radiator as per claim 6 characterised in that on either side it has lower (15) and upper (16) parts which open towards the outside and allow air to penetrate and to exit the containment respectively, the said hollow elements (15) having an outer appearance which is similar to that of decorative panels (17) fitted on the lateral plates (14).
